# DEMANDE DE BREVET EUROPEEN

(11) **EP 1 712 134 A1**
(43) Date de publication de la demande: **18.10.2006**
(21) Numéro de dépôt: 06290448.7
(22) Date de dépôt: 21.03.2006
(51) Int. Cl.: A21D 13/00, A21D 10/04, A21D 2/18, A21C 15/02, A21D 13/08

(54) **Procédé de fabrication en continu d'un biscuit présentant au moins un motif de marquage et biscuit ainsi obtenu**

(30) Priorité: 11.04.2005 FR 0503559
(71) Demandeur: Generale Biscuit, 94150 Rungis (FR)
(72) Inventeur: Lelong, Jean-Marc, 02400 Etampes / Marne (FR)
(74) Mandataire: Jacquard, Philippe Jean-Luc

(57) **Abrégé**

L'invention concerne un procédé de fabrication en continu de biscuits (3) présentant au moins un motif de marquage en surface, caractérisé en ce qu'il présente :
a) la réalisation d'une pâte crue de type molle ou semi-liquide comportant la composition pondérale suivante :
b) 25% à 35% de farine,
c) 0% à 8% de dérivé amylacé, notamment amidon de blé
d) 15% à 25% de sucre,
e) 6% à 11 % de maltitol
f) 0% à 10% de fibres
g) 4% à 10% de matière grasse
h) 1 % à 4% d'au moins un produit à base de lait
i) 1 % à 4% d'oeufs
j) 0,5% à 2% d'au moins un autre ingrédient,
k) 17% à 25% d'eau ajoutée
l) la dépose de pâtons individuels (2) de ladite pâte crue sur un dispositif transporteur tel qu'un tapis (6)
m) la cuisson au four (1) desdits pâtons cuits (2)
n) à la sortie du four, le marquage (4) des pâtons cuits (2) avec au moins un dit motif de marquage, avant que n'intervienne une cristallisation notable du sucre
o) un refroidissement desdits pâtons cuits marqués pour produire une cristallisation du sucre qui fixe ledit motif de marquage, pour obtenir lesdits biscuits (3).

## Description

La présente invention a pour objet un procédé de fabrication d'un biscuit présentant au moins un motif de marquage et un biscuit ainsi obtenu.

Les différentes techniques de façonnage connues en biscuiterie industrielle mettent en oeuvre des pâtes dont la consistance est plus ou moins dure ou plus ou moins liquide, ces pâtes étant caractérisées par des formulations bien spécifiques et un procédé industriel adapté.

Par conséquent, chaque type de pâte nécessite une adaptation d'un système de façonnage pour sa mise en forme, l'objectif étant de réaliser des produits réguliers, de forme appropriée. Dans certains cas, les produits présentent des dessins en creux ou en relief. Dans tous les cas, la reproductibilité du procédé industriel et la précision du dessin doivent être parfaitement maîtrisées.

Les pâtes les plus dures sont laminées, puis découpées. Dans ce cas, le découpage a pour but de fractionner en morceaux réguliers la pâte laminée pré-calibrée.

Les pâtes semi-dures, plus souples et plus grasses, sont rotomoulées.

Les pâtes molles ou semi-liquides plus particulièrement concernées par la présente invention sont déposées par pochage directement sur la bande du four.

Et enfin, les pâtes liquides, qui présentent une formulation différente de celle des pâtes dites molles ou semi-liquides sont coulées dans des moules à gaufre.

Ces divers procédés de façonnage donnent la forme générale du produit ; c'est ainsi que l'on trouve des formes géométriques : ronde, carrée, rectangulaire, triangulaire mais également des formes de fantaisie.

Des éléments secondaires de forme, ou de décoration de surface, peuvent être donnés au produit au cours du façonnage selon les caractéristiques de pâtes et les procédés mis en oeuvre c'est-à-dire :
- avec un rouleau graveur, pendant l'opération de découpe, dans le cas de pâtes dures
- avec un rotomouleur comprenant différentes inscriptions ou dessins dans le moule, dans le cas de pâtes semi-dures crues
- ou selon le dessin de moules à gaufrettes dans le cas des pâtes liquides ; par exemple, dans ce cas, il est possible de réaliser des produits ondulés tels que la gaufrette « Paille d'Or» de LU qui existe depuis des décennies ; cela illustre bien les différentes possibilités de façonnage applicables à cette famille de produits, qui permettent d'utiliser d'autres types de dessins permettant de différencier davantage les gaufrettes du dessin de type quadrillage utilisé plus généralement.

Cependant, dans le cas de pâtes semi-liquides, il n'est pas possible de marquer la surface du biscuit avant cuisson, la consistance trop fluide de la pâte ne permettant pas le marquage en surface. Il est alors simplement possible de donner la forme générale du produit c'est-à-dire par exemple ronde, telle que la tuile, ou ovale telle que la langue de chat.

Les pâtes semi-liquides (ou molles) sont généralement des pâtes riches en sucres (25 à 35%), pauvres en matières grasses (< 10%) et contenant des oeufs, et dont les caractéristiques organoleptiques évoluent en fonction de la proportion des différents ingrédients mis en oeuvre.

Pour de telles pâtes, le procédé de fabrication consiste à pocher une pâte fluide au travers de douilles, avec une emmouleuse ; la pâte est alors déposée directement sur la bande du four préalablement graissée et farinée.

Le procédé classiquement mis en oeuvre est un procédé industriel en continu de façonnage et cuisson en four tunnel.

La forme du produit est ainsi donnée d'une part par la configuration des douilles de pochage et d'autre part, par le mouvement de l'emmouleuse au moment du pochage. Cependant il n'est pas possible d'obtenir une grande diversité de forme générale, sans parler des formes secondaires qui s'estomperaient à la cuisson. En effet, le produit subit une déformation importante pendant la cuisson, par étalement de la pâte. Cet étalement de la pâte est influencé également par les paramètres de cuisson, ce qui permet d'obtenir des produits plus ou moins épais et par conséquent plus ou moins étalés, et qui présentent une texture interne de type alvéolaire.

Le produit est cuit dans un four tunnel en continu et le pâton, une fois cuit, obtient sa forme définitive, et il ne subit pas de rectification de sa forme sauf s'il y a ajout d'éléments supplémentaires tels que nappage, décor, ou autres.

Après cuisson, le produit est rond, ovale ou ovoïde, le contour peut être irrégulier mais dans tous les cas, le biscuit présente une face inférieure plane et dans la fabrication classique, il présente une face supérieure lisse et légèrement bombée.

La Demande de Brevet EP-1008300-A1 décrit une technique innovante qui permet, à partir d'une pâte dite molle ou semi-liquide de composition spécifiée, de fabriquer d'un biscuit qui présente au moins un motif de marquage en relief de contour défini comme des stries rectilignes ou des ondulations.

Ceci est rendu possible par un marquage qui est réalisé, non pas sur la pâte crue, mais en sortie du four, la mémoire de ce marquage étant obtenue grâce à la cristallisation du sucre qui intervient après marquage, lors du refroidissement du biscuit.

Ce biscuit, qui présente des qualités organoleptiques remarquables présente une teneur en sucre relativement élevée (25% à 35% en poids de la pâte crue) qu'il serait souhaitable d'abaisser pour des raisons diététiques. Or, l'inventeur a pu mettre en évidence que, de manière surprenante, la marquabilité du produit, qui implique d'une part, la présente d'une phase ayant une malléabilité remarquable en sortie du four et d'autre part un durcissement irréversible après refroidissement pouvait être conservée bien que l'on abaisse la teneur en sucre en dessous de 25%, grâce à l'adjonction d'une substance de charge constituée par du maltitol.

L'invention concerne ainsi un procédé de fabrication en continu de biscuits présentant au moins un motif de marquage en surface, caractérisé en ce qu'il présente :
a) la réalisation d'une pâte crue de type molle ou semi-liquide comportant la composition pondérale suivante :
   - 25% à 35% de farine,
   - 0% à 8% de matière amylacée, par exemple amidon de blé
   - 15% à 25% de sucre,
   - 6% à 11 % de maltitol
   - 0% à 10% de fibres (par exemple polydextrose)
   - 4% à 10% de matières grasses
   - 1 % à 4% d'au moins un produit à base de lait
   - 1 % à 4% d'oeufs
   - 0,5% à 2% d'autres ingrédients, tels que sel, arôme, bicarbonate de soude,
   - 17% à 25% d'eau ajoutée
b) la dépose de pâtons individuels de ladite pâte crue sur un dispositif transporteur tel qu'un tapis
c) la cuisson au four desdits pâtons cuits
d) à la sortie du four, le marquage des pâtons cuits avec au moins un dit motif de marquage, avant que n'intervienne un durcissement notable du biscuit
e) un refroidissement desdits pâtons cuits marqués pour produire un durcissement qui fixe ledit motif de marquage, pour obtenir lesdits biscuits.

Le ou les produits à base de lait peuvent être des ingrédients secs tels que poudre de lait entier, poudre de lait écrémé, lactosérum en poudre. On peut aussi utiliser des ingrédients liquides tels que du lait ou du lactosérum liquide.

Les oeufs sont généralement incorporés sous forme d'oeufs en poudre, mais on peut aussi utiliser des oeufs entiers ou de coule fraîche.

Le sucre peut notamment être une poudre de saccharose.

Le remplacement d'une partie du sucre (saccharose) par la substance de charge que constitue le maltitol permet de répondre aux exigences nutritionnelles. En effet le maltitol présente une valeur énergétique de 2,4 cal/g au lieu de 4 cal/g pour les glucides tels que le saccharose. Il s'avère en outre que de manière surprenante, l'ensemble sucre-maltitol permet de conserver les propriétés technologiques de marquabilité à la sortie du four.

Pour les ingrédients qui peuvent être apportés sous forme solide ou liquide, on considérera, dans le cas où ils sont apportés sous forme liquide, que leur teneur en eau est prise en compte dans la formule en tant que "eau ajoutée".

Le marquage peut être réalisé en appliquant une pression de marquage, en particulier à l'aide d'un cylindre présentant au moins un motif de marquage en négatif du motif de marquage, notamment strié, à réaliser. La vitesse tangentielle du cylindre est sensiblement égale à la vitesse de déplacement des pâtons cuits à marquer.

Un biscuit selon l'invention est ainsi caractérisé en ce qu'il présente une composition pondérale de :
- 30% à 43% de farine
- 0% à 10% d'au moins un dérivé amylacé, dont l'amidon de blé
- 18% à 29% de sucre
- 7% à 13% de maltitol
- 0% à 12% de fibres
- 5% à 13% de matières grasses
- 1% à 5% d'au moins un produit à base de lait
- 1 % à 5% d'oeufs
- 0,6% à 2,5% d'au moins un autre ingrédient
- moins de 5% d'eau.

La perception du consommateur est modifiée en raison notamment du travail de la pâte à l'état cuit, qui en modifie les propriétés, et confère au produit une friabilité plus élevée que dans le cas d'un produit non marqué.

Les stries sont avantageusement formées sur une première face du biscuit, qui présente une deuxième face qui est sensiblement plane. Le marquage de la pâte cuite s'accompagne alors d'une variation d'épaisseur, ce qui implique un plus grand travail de la pâte.

Les stries peuvent être rectilignes, ou bien former des ondulations, dont le demi-pas p est avantageusement compris entre 2 mm et 15 mm, avec une amplitude crête à crête comprise avantageusement entre 2 mm et 8 mm.

Les stries peuvent être espaces les unes des autres d'une distance comprise entre 2 mm et 6 mm, et leur profondeur peut être comprise entre 2 mm et 6 mm.

D'autres caractéristiques et avantages de l'invention apparaîtront mieux à la lecture de la description qui va suivre, donnée à titre d'exemple non limitatif en liaison avec les dessins dans lesquels :
- la Figure 1 représente un schéma illustrant la mise en oeuvre du procédé selon l'invention,
- la Figure 2 représente une section axiale d'un cylindre de façonnage, pour des stries rectilignes,
- les Figures 3a à 3d représentent différents motifs de marquage d'un biscuit selon l'invention.

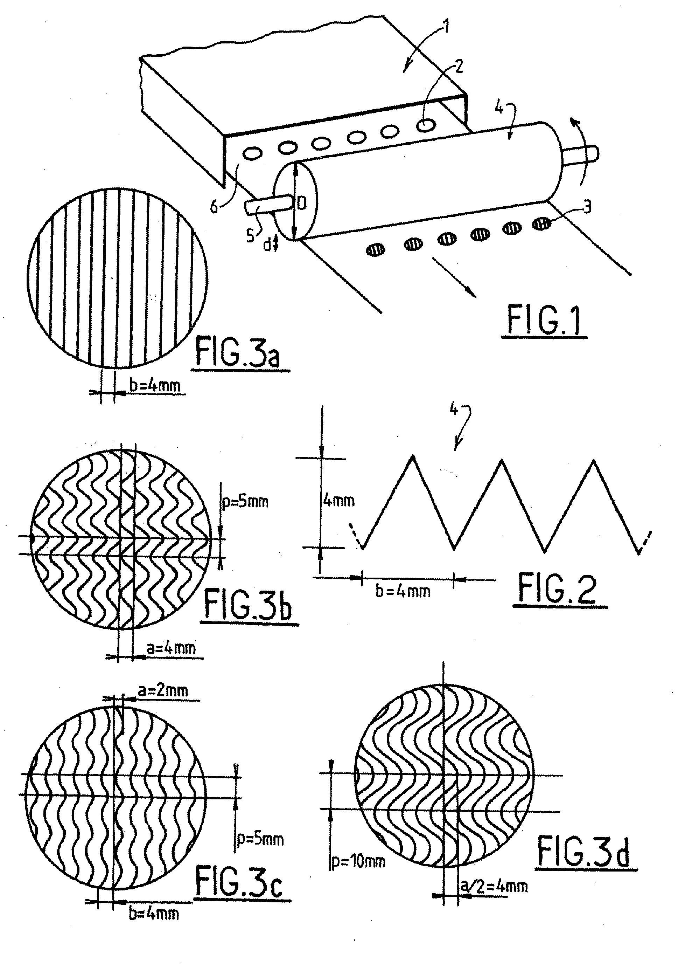

La présente invention repose sur la mise en évidence du fait que, dans un procédé industriel en continu, de type connu pour la fabrication de tuiles, et pour la composition spécifiée de la pâte crue, il est possible, juste après la sortie du four, de réaliser un marquage du produit de telle sorte qu'il est possible d'établir des dessins sur la partie supérieure du biscuit (voir figure 1)

Les dessins peuvent présenter une grande diversité de motifs en relief en représentant par exemple des stries rectilignes (cf. figures 2 et 3a) ou des sinusoïdes avec des amplitudes plus ou moins grandes (cf. figures 3b à 3d)

Le marquage est réalisé dès la sortie du four et le marquage ne peut être effectué qu'à ce stade du procédé.

En effet, à la sortie du four 1 la structure interne du biscuit 2 n'est pas encore figée ce qui confère au biscuit une bonne aptitude à être modelé. Le biscuit doit être suffisamment malléable pour accepter les déformations générées par le système de marquage.

Cette aptitude au modelage s'explique essentiellement par la formulation du biscuit combinant du sucre (saccharose) et du maltitol selon la formule indiquée, qui confère au biscuit une certaine plasticité alors qu'il est encore chaud. La température du biscuit à la sortie du four est proche de 100°C.

Le durcissement du sucre et du maltitol intervient très rapidement après la sortie du four, ce qui provoque un durcissement très rapide du biscuit : la structure interne se fige. Il suffit de quelques secondes pour passer d'un produit plastique à un produit dur; moins de 10 secondes suffisent. Le marquage doit être réalisé en moins de 20 secondes après la sortie du four, faute de quoi, la qualité du marquage est dégradée, car il se produit alors un durcissement notable du biscuit à partir de sa surface.

Le biscuit marqué 3, une fois refroidi, est marqué par les déformations auxquels il a été soumis à la sortie du four.

En aucun cas, le produit 3 ne pourra être façonné après le refroidissement. En effet, si tel était le cas, cela se traduirait par une abrasion du produit par le système de façonnage, provoquant alors un effritement du biscuit en surface , voire une casse du biscuit par découpage.

De même il n'est pas possible de réchauffer le biscuit 3 après le refroidissement pour permettre son façonnage car le biscuit 3 ne retrouve pas une plasticité suffisante : l'opération est irréversible.

Le système de façonnage est caractérisé par un cylindre de marquage 4; le cylindre occupe toute la largeur de la bande de four de manière à marquer l'ensemble des produits sortant du four. Il est perpendiculaire au sens de défilement de la bande de four.

Le cylindre 4 est placé directement sur la bande 6 du four, à une distance d inférieure par exemple à 5 mm de telle sorte que les produits puissent être en contact avec le cylindre. Dans ce cas l'épaisseur e du produit avant façonnage sera légèrement supérieure à la distance d et dans ce cas sera de l'ordre de 6 mm.

Le cylindre est placé sur un axe 5 qui lui permet d'avoir un mouvement de rotation. La vitesse de rotation du cylindre 4 est sensiblement la même que la vitesse de la bande du four 1 : il n'y a pas de différentiel de vitesse. Si le cylindre n'est pas motorisé, sa rotation est provoquée par le passage des produits 2 à marquer.

Le dessin ou motif à façonner est gravé sur le cylindre 4 ; le dessin a des caractéristiques dimensionnelles bien définies (cf. figures 3a à 3d). Dans le cas de stries rectilignes ou formant des ondulations, notamment sinusoïdales, le dessin présente des pics et des creux.

En se référant à la figure 2, la forme des pics et des creux des ondulations à la surface du cylindre est telle que, en section axiale, le cylindre présente un profil à dents. Chaque strie est séparée de la suivante par une distance b bien définie et cette distance peut varier par exemple de 2 à 6 mm. D'autre part, le dessin est parfaitement symétrique et se reproduit de façon régulière sur toute la longueur du cylindre. La profondeur des stries est également bien déterminée et peut varier par exemple de 2 à 6 mm.

Dans le cas d'un dessin sinusoïdal (cf. figure 3b à 3d), l'amplitude a des stries peut également varier par exemple de 2 à 8 mm et comporter un demi-pas p variant par exemple de 2 à 15 mm.

Le dessin gravé dans le cylindre doit générer un marquage suffisant sans provoquer une trop forte adhérence du biscuit qui risquerait d'entraîner un embourbement du cylindre.

Le nombre de stries par biscuit peut être compris par exemple entre 8 et 15.

Le cylindre a un diamètre D par exemple de 240 mm qui est choisi de manière à maintenir une pression suffisante sur le biscuit au moment du marquage et donc obtenir un meilleur résultat de marquage. Plus le diamètre D est petit, et plus la pression sur le biscuit à façonner est faible et inversement, plus le diamètre D est grand, plus la pression est importante et dans ce cas, le produit est également maintenu plus longtemps par le système de façonnage.

Le façonnage en sortie de four permet de travailler la pâte cuite dans son épaisseur, ce qui en modifie la texture et permet d'obtenir un produit plus friable, ce qui fait que le produit peut être perçu comme plus "croustillant".

De préférence, un revêtement anti-adhérant recouvre toute la surface du cylindre 4 de telle sorte que les biscuits n'adhèrent pas à celui-ci au cours de l'opération de façonnage. Au moment du façonnage, il est important que les biscuits restent collés à la bande 6 de four ; dans le cas contraire, les biscuits adhéreraient au cylindre et provoqueraient un embourbement.

Les biscuits sont décollés de la bande 6 de four après l'opération de marquage ; ils sont ensuite transférés sur un convoyeur de refroidissement.

Il n'est pas connu par ailleurs de biscuits de composition telle que définie qui présente un marquage en surface sous forme de dessin au contour précis telles que les ondulations ou stries rectilignes.

La pâte crue de type molle ou semi-liquide, convenant à la présente invention, présente une composition pondérale suivante :

| | |
|---|---|
| Farine | 25% à 35% |
| Dérivés amylacés dont notamment l'amidon de blé | 0% à 8% |
| Sucre | 15% à 25% |
| Maltitol | 6% à 11% |
| Fibres (dont polydextrose) | 0% à 10% |
| Matière grasse | 4% à 10% |
| Lait ou dérivés de lait | 1% à 4% |
| Oeufs | 1% à 4% |
| Autres ingrédients (sels et/ou arôme et/ou bicarbonate de soude) | 0,5% à 2% |
| Eau ajoutée | 17% à 25% |

Comme indiqué plus haut, au cas où certains ingrédients (oeufs, dérivés de lait, sucres) ne seraient pas apportés sous forme de poudre mais sous forme de liquide, leur teneur en eau devrait être prise en compte en tant qu' "eau ajoutée".

### Exemple

En utilisant le système que l'on a décrit, une pâte est réalisée en ayant la composition suivante (% calculé sur le poids total de la pâte crue).

| Avant cuisson | |
|---|---|
| % ingrédients mis en oeuvre par rapport au poids | |
| Farine | 29,2% |
| Amidon de blé | 5,5% |
| Sucre cristallisé | 17,5% |
| Maltitol | 8,4% |
| Fibres | 6,3% (par exemple fructo-oligosaccharides 4%, polydextrose 2,3%) |
| Matière grasse | 5,6% (par exemple huile de palme 2,8% ; huile de colza 2,8%) |
| Lait entier en poudre | 2% |
| Oeufs en poudre | 1,5% (par exemple oeuf entier en poudre 0,75% ; jaune d'oeuf en poudre 0,75%) |
| Divers ingrédients | 1,6% (par exemple sel 0,3%, arôme 0,4%, bicarbonate de soude 0,3%, phosphate acide monocalcique 0,4%, poudre de cannelle 0,2%) |
| Eau | 22,4% |

La pâte est pochée sur la bande du four de manière à former des pâtons de formes rondes ayant un diamètre de 40 mm puis les produits sont cuits de manière à former des biscuits.

Après cuisson, les produits obtenus ont un diamètre de 50 mm et présentent une épaisseur de l'ordre de 6 mm.

Les biscuits sont façonnés à l'aide du cylindre de façonnage décrit, de manière à réaliser des stries rectilignes parfaitement symétriques, ou bien encore en zigzag.

## Revendications

1. Procédé de fabrication en continu de biscuits présentant au moins un motif de marquage en surface, **caractérisé en ce qu'**il présente :
a) la réalisation d'une pâte crue de type molle ou semi-liquide comportant la composition pondérale suivante :
- 25% à 35% de farine,
- 0% à 8% de dérivé amylacé, notamment amidon de blé
- 15% à 25% de sucre,
- 6% à 11% de maltitol
- 0% à 10% de fibres
- 4% à 10% de matière grasse
- 1 % à 4% d'au moins un produit à base de lait
- 1 % à 4% d'oeufs
- 0,5% à 2% d'au moins un autre ingrédient,
- 17% à 25% d'eau ajoutée
b) la dépose de pâtons individuels de ladite pâte crue sur un dispositif transporteur tel qu'un tapis
c) la cuisson au four desdits pâtons cuits
d) à la sortie du four, le marquage des pâtons cuits avec au moins un dit motif de marquage, avant que n'intervienne une cristallisation notable du sucre
e) un refroidissement desdits pâtons cuits marqués pour produire une cristallisation du sucre qui fixe ledit motif de marquage, pour obtenir lesdits biscuits.

2. Procédé selon la revendication 1, **caractérisé en ce que** ledit marquage est réalisé en appliquant une pression de marquage.

3. Procédé selon la revendication 2, **caractérisé en ce que** ledit marquage est réalisé par un cylindre présentant au moins un motif de marquage en négatif et dont la vitesse tangentielle est sensiblement égale à la vitesse de déplacement des pâtons cuits à marquer.

4. Procédé selon une des revendications 1 à 3, **caractérisé en ce que** le motif de marquage est strié, notamment linéairement ou de manière à former des ondulations.

5. Procédé selon une des revendications 1 à 3, **caractérisé en ce que** la pâte crue comporte la composition pondérale suivante :
| | |
|---|---|
| Farine | 29,2% |
| Amidon de blé | 5,5% |
| Sucre cristallisé | 17,5% |
| Maltitol | 8,4% |
| Fibres (dont polydextrose) | 6,3% |
| Matière grasse | 5,6% |
| Lait entier en poudre | 2% |
| Oeufs | 1,5% |
| Autres ingrédients (sels et/ou arôme et/ou bicarbonate de soude) | 1,6% |
| Eau ajoutée | 22,4% |

6. Biscuit présentant au moins un motif de marquage, **caractérisé en ce qu'**il présente une composition pondérale de :
- 30% à 43% de farine
- 0% à 10% d'au moins un dérivé amylacé, notamment amidon de blé
- 18% à 29% de sucre
- 7% à 13% de maltitol
- 0% à 12% de fibres
- 5% à 13% de matières grasses
- 1 % à 5% d'au moins à produit à base de lait
- 1 % à 5% d'oeufs
- 0,6% à 2,5% d'au moins un autre ingrédient
- moins de 5% d'eau.

7. Biscuit selon la revendication 6, **caractérisé en ce qu'**au moins un dit motif de marquage présente des stries.

8. Biscuit selon la revendication 7, **caractérisé en ce que** les stries sont formées sur une première face du biscuit, qui présente une deuxième face plane.

9. Biscuit selon une des revendications 7 ou 8, **caractérisé en ce que** les stries sont rectilignes ou bien forment des ondulations.

10. Biscuit selon la revendication 9, **caractérisé en ce que** les stries sont des ondulations dont le demi-pas p est compris entre 2 mm et 15 mm.

11. Biscuit selon une des revendications 9 ou 10, **caractérisé en ce que** les stries sont des ondulations dont l'amplitude a de crête à crête est comprise entre 2 mm et 8 mm.

12. Biscuit selon une des revendications 7 à 11, **caractérisé en ce que** les stries sont espacées les unes des autres d'une distance b comprise entre 2 mm et 6 mm.

13. Biscuit selon une des revendications 7 à 12, **caractérisé en ce que** la profondeur des stries est comprise entre 2 mm et 6 mm.
